# EUROPÄISCHE PATENTSCHRIFT

(11) **EP 4 096 815 B1**
(45) Veröffentlichungstag und Bekanntmachung des Hinweises auf die Patenterteilung: **06.03.2024**
(21) Anmeldenummer: 21700537.0
(22) Anmeldetag: 12.01.2021
(51) Int. Cl.: B01J 2/20, A24D 3/02

(54) **VERFAHREN ZUM STOFFLICHEN WIEDERVERWENDEN VON CELLULOSEACETATHALTIGEM MATERIAL UND MIT DIESEN VERFAHREN HERGESTELLTES GRANULAT**
METHODS FOR RECYCLING CELLULOSE ACETATE-CONTAINING MATERIAL AND GRANULATE PRODUCED WITH THESE METHODS
PROCÉDÉS DE RECYCLAGE DE MATÉRIAU CONTENANT DE L'ACÉTATE DE CELLULOSE ET GRANULÉS PRÉPARÉS PAR CES PROCÉDÉS

(30) Priorität: 29.01.2020 DE 102020102079
(43) Veröffentlichungstag der Anmeldung: 07.12.2022
(73) Patentinhaber: Cerdia International GmbH, 4052 Basel (CH)
(72) Erfinder: RÖTHER, Stefan, 79115 Freiburg (DE); SCHÄFFNER, Uwe, 79279 Vörstetten (DE); SCHÖNBERGER, André, 68490 Bantzenheim (FR)
(74) Vertreter: Meissner Bolte Partnerschaft mbB
(86) Internationale Anmeldenummer: PCT/EP2021/050437
(87) Internationale Veröffentlichungsnummer: WO 2021/151650

(56) Entgegenhaltungen:
- CA-A- 893 501
- DE-A1- 1 931 137
- DE-A1- 2 501 209
- DE-A1-102011 010 260
- DE-A1-102017 011 894
- DE-C3- 1 931 137
- US-A1- 2019 364 959

## Beschreibung

Die Erfindung betrifft Verfahren zum stofflichen Wiederverwenden von celluloseacetathaltigen Materialien.

Insbesondere betrifft die Erfindung Verfahren zum stofflichen Wiederverwenden von Filtertow-Material, insbesondere Filtertow-Ausgangsmaterial, Zigarettenstababfällen und/oder Zigarettenfiltern. Außerdem betrifft die Erfindung ein Granulat aus solchen Verfahren.

In der Zigarettenindustrie werden jährlich weltweit ca. 800 kt Filtertow zu Filterstäben und diese dann weiter zu Zigaretten verarbeitet. Hierbei lässt sich selbst bei hochentwickelten Prozessen das Entstehen von Produktionsabfällen bzw. Produktionsausschüssen kaum völlig vermeiden. Dabei kann man bei der Produktion von Filterstäben von einem Ausschussanteil von 1 bis 2 % ausgehen, so dass weltweit jährlich ca. 8.000 bis 16.000 Tonnen pro Jahr anfallen.

Dieser Ausschuss (Filtertow-Material, insbesondere Filtertow-Ausgangsmaterial) und der bei der Filterstab- und/oder Zigarettenherstellung anfallende Filterstababfall wird üblicherweise dadurch entsorgt, dass er vernichtet, d.h. verbrannt wird. Da das Filtertow-Material in Rohform und auch in Form von Filterstäben eine äußerst geringe Dichte aufweist (etwa 50 kg/m³), entstehen hierbei bei den der Entsorgung vorgelagerten Prozessen, wie beispielsweise bei der Lagerung und dem Transport, hohe Kosten.

Ein weiteres Problem ist in den Zigarettenfilterabfällen zu sehen, da etwa 5,5 Billionen Zigarettenstummel weltweit pro Jahr weggeworfen werden, wobei diese Abfälle nicht oder nur sehr aufwendig kompostierbar sind.

Der Erfindung liegt daher die Aufgabe zugrunde, Verfahren, Produkte hieraus und Systeme anzugeben, die die oben genannten Probleme und Nachteile beim Umgang mit Filtertow-Material und Filter-Material, insbesondere in Form von während der Produktion anfallenden Ausschüssen und/oder in Form von Zigarettenstummel, ausräumen.

Konzepte zur stofflichen Verwertung von cellulosehaltigem Zigarettenfiltermaterial wurden bereits in DE102011010260 A1 und DE1931137 A1 offenbart.

Ausgehend vom Stand der Technik besteht eine erfinderische Lösung darin, ein Verfahren zum stofflichen Wiederverwenden von celluloseacetathaltigem Filtertow-Material, insbesondere Filtertow-Ausgangsmaterial, Zigarettenstababfällen und/oder Zigarettenfiltern anzugeben, dessen Schritte im Anspruch 1 definiert sind.

Mit dem erfindungsgemäßen Verfahren zum stofflichen Wiederverwenden von Filtertow-Material, insbesondere Filtertow-Ausgangsmaterial, Zigarettenstababfällen und/oder Zigarettenfiltern wird die Aufgabe in zufriedenstellender Weise gelöst.

Insbesondere wird durch das Verfahren ein zu lagerndes Gut geschaffen, dessen Dichte eine kostengünstigere Lagerung ermöglicht. Somit sind die Pellets problemlos zu lagern, und insbesondere auch problemlos zu fördern und zu transportieren.

Wenn es sich bei dem wiederzuverwertenden celluloseacetathaltigen Material um ausschließlich aus innerhalb der Produktion anfallendem Ausschuss handelt, wie beispielsweise Filtertow-Material, insbesondere Filtertow-Ausgangsmaterial, ist hier das Wiederverwenden bzw. Recyceln des Ausschusses (Produktionsabfälle) äußerst sinnvoll. Die Produktionsabfälle fallen in unmittelbarer Nähe der Fertigungseinrichtung an und sind meist wenig oder gar nicht verschmutzt, sodass kaum logistische oder technologische Probleme entstehen. Außerdem sind die Zusammensetzung und der Zustand des wiederzuverwertenden celluloseacetathaltigen Materials durch die Prozessüberwachung genau bekannt.

Entsprechend ist es möglich, das bei der Produktion anfallende Filtertow-Ausgangsmaterial stofflich wiederzuverwenden, statt dieses zu vernichten (verbrennen). An dieser Stelle findet somit auch eine Prozessoptimierung für eine nachhaltigere Produktion statt, die insgesamt zu einer besseren Ökobilanz der Produkte führen kann.

Andererseits eignet sich das erfindungsgemäße Verfahren auch zur stofflichen Wiederverwendung von celluloseacetathaltigen Materialien, die zusätzlich zu Celluloseacetat auch noch andere Komponenten aufweisen, wie beispielsweise Papier bei während der Filterstabherstellung entstehendem Ausschuss, oder Papier und Tabak bei Zigarettenstummel.

Celluloseacetat selbst ist eine Sammelbezeichnung für die Essigsäureester der Cellulose. Insgesamt ist Celluloseacetat ein amorpher Thermoplast, der mittels Transformation von Baumwoll- und/oder Holzzellulose gewonnen wird.

Beim Pelletieren wird das wiederzuverwendende celluloseacetathaltige Material, welches im Folgenden auch als "Ausgangsmaterial" bezeichnet wird, zermahlen und verpresst, wobei die zwischen dem Ausgangsmaterial und den fertigen Pellets liegenden Material-Erscheinungsformen hier als Material-Zwischenstufen bezeichnet werden.

Gemäß einer vorteilhaften Weiterbildung der Erfindung ist dem Zuführen von Ausgangsmaterial folgender Schritt vorgeschaltet: Zerkleinern des Ausgangsmaterials.

Je nach Ausgestaltung des Ausgangsmaterials kann es sinnvoll sein, dieses vor dem Zuführen zu der Pelletierpresse bereits zu zerkleinern, um einen reibungslosen Ablauf während des Pelletierens zu gewährleisten und den Durchlauf der Pelletierpresse zu verbessern.

Gemäß der Erfindung besteht das Ausgangsmaterial zumindest teilweise, vorzugsweise vollständig, aus bei der Produktion anfallendem Spinnereiausschuss oder Filtertow-Ballen.

Hier bietet sich insbesondere der Vorteil, dass der anfallende Spinnereiausschuss oder die Filtertow-Ballen nicht verunreinigt sind und sich somit sehr gut zur Weiterverarbeitung eignen.

Gemäß der Erfindung werden bei der Kühlung das Ausgangsmaterial, die Pellets und/oder die Material-Zwischenstufen unterhalb einer kritischen Temperatur gehalten.

Die kritische Temperatur entspricht einer Verglasungstemperatur des Celluloseacetats.

Celluloseacetat weist eine recht schwache Temperatur- und Chemikalienfestigkeit auf. So liegt die Verglasungstemperatur bzw. Glasübergangstemperatur von Celluloseacetat bereits zwischen 125°C und 175°C. Folglich ist eine Kühlung des Prozesses wichtig, die die Temperatur unterhalb der Verglasungstemperatur hält, um zu verhindern, dass sich die Materialien so weit thermisch abbauen, dass sie nicht mehr weiter zu verwenden sind.

Gemäß der Erfindung erfolgt das Pelletieren mittels eines Kollers und einer Matrize.

Bei der Matrize handelt es sich insbesondere um eine Lochmatrize, durch die das Material von den Kollern gedrückt und zu Strängen geformt wird. Bei den Strängen kann es sich um Endlos-Stränge handeln, die in einem folgenden Verfahrensschritt mit Messern in die gewünschte Pelletlänge zerschnitten werden. Vorteilhafterweise ist die Kollerspaltweite, vorzugsweise während des Betriebes, einstellbar, so dass die Pelletdichte bzw. Pelletqualität beeinflussbar ist.

Gemäß der Erfindung ist die Matrize aus einem thermisch leitfähigen Material ausgebildet und die Kühlung erfolgt über die Matrize.

Dies hat den Vorteil, dass die Kühlung unmittelbar in Nähe der besonders zu kühlenden Pellets und Material-Zwischenstufen erfolgt, die für eine Verglasung besonders anfällig sind.

Gemäß der Erfindung erfolgt die Kühlung mittels einer Fluidkühlung, vorzugsweise einer Wasserkühlung, und/oder mittels einer Festkörperkühlung.

Hierbei wird insbesondere die Fluidkühlung als besonders geeignet angesehen, da diese äußerst einfach umzusetzen ist und sich mit dieser auch die Matrize gut kühlen lässt.

Gemäß einer vorteilhaften Weiterbildung der Erfindung weist das Ausgangsmaterial eine Dichte von etwa 30 kg/m³ bis etwa 80 kg/m³ und vorzugsweise eine Dichte von etwa 45 kg/m³ bis etwa 65 kg/m³ auf, wobei die Pellets eine Schüttdichte von etwa 350 kg/m³ bis etwa 650 kg/m³ und vorzugsweise eine Schüttdichte von etwa 450 kg/m³ bis etwa 550 kg/m³ aufweisen.

An dieser Stelle wird der durch die Verdichtung erreichte und bereits beschriebene Vorteil bei der Lagerung deutlich. So haben die Pellets eine derart hohe Dichte, dass ihre Schüttdichte nur etwa einen Zehntel der Dichte des Ausgangsmaterials ausmacht. Dies führt somit bei der Lagerung unmittelbar zu einem Zehntel des Platzbedarfs.

In diesem und auch späteren Zusammenhängen bezeichnet der Betriff "etwa" eine Abweichung von maximal bis zu 5 %.

Eine erfindungsgemäße Lösung besteht weiterhin darin, ein Verfahren zum stofflichen Wiederverwenden von Filter-Ausgangsmaterial oder Zigarettenfiltern anzugeben, wobei dieses Material aus Celluloseacetat und Papier besteht oder Celluloseacetat und Papier aufweist, und wobei das Verfahren die Schritte gemäss Anspruch 4 aufweist.

Auch hier gelten die bereits beim Verfahren zum stofflichen Wiederverwenden von Filtertow-Ausgangsmaterial erwähnten Vorteile. Insbesondere fällt der Kostenanteil durch die Lagerung der weniger voluminösen Pellets deutlich geringer aus. Darüber hinaus lassen sich Pellets wesentlich einfacher transportieren, da insbesondere eine pneumatische Förderung möglich ist. Unter dem Begriff "pneumatische Förderung" ist allgemein der Transport von Schüttgütern mit Gas (meistens Luft) mittels Über- oder Unterdruck zu verstehen. Die Förderung findet prinzipbedingt durch Rohre oder Schläuche statt. Auch die Förderung über Fluidrinnen (Vierkantrohre mit Auflockerungsboden) ist weit verbreitet. Die erfindungsgemäßen Pellets eignen sich insbesondere für Flug-, Pfropfen- und Fließförderung.

Im Gegensatz zu den vorgenannten Verfahren jedoch weist das Filter-Ausgangsmaterial und das Zigarettenfiltermaterial zusätzlich zu dem Celluloseacetat unter anderem auch Papier auf.

Das Zerkleinern des Filter-Ausgangsmaterials erfolgt in einem Schredder, der dem Pelletieren des Filter-Ausgangsmaterials vorangeschaltet ist. Hierbei ist es selbstverständlich auch denkbar, dass der Schredder zum Zerkleinern des Filter-Ausgangsmaterials in der Pelletierpresse integriert ist.

Da hier der eigentliche Pelletiervorgang den Flaschenhals des Produktionsverfahrens ausbildet, kann der Zerkleinerungsvorgang (Schredder-Vorgang) als Dosierer für den nachfolgenden Pelletiervorgang dienen. Somit wird ein Materialstau zwischen der Schredder-Stufe und der Pelletier-Stufe wirkungsvoll vermieden.

Da das Filter-Ausgangsmaterial und das Zigarettenfiltermaterial einen äußerst geringen mechanischen Widerstand leistet, ist es möglich, den Schredder mit einer kleinen Leistungsstufe auszubilden, mit der die Dosierung einfach erfolgen kann. Als beispielhafter Durchsatz des Pelletiervorgangs bzw. Pelletierprozesses ist ein Durchsatz von etwa 150 kg/h realistisch.

Gemäß einer vorteilhaften Weiterbildung der Erfindung beträgt der Anteil an Celluloseacetat in dem Filter-Ausgangsmaterial mindestens 90 %, wobei der Anteil an Papier und anderen Fremdstoffen, wie beispielsweise Tabakreste, in dem Filter-Ausgangsmaterial bzw. in dem Zigarettenfiltermaterial höchstens 10 % beträgt (jeweils abzüglich des Wasseranteils).

Gemäß einer vorteilhaften Weiterbildung der Erfindung weist das Filter-Ausgangsmaterial und/oder das Zigarettenfiltermaterial Verunreinigungen und/oder celluloseacetatfremde Komponenten auf, deren Anteil mit dem des Papieres zusammengenommen höchstens 10 % beträgt.

Gemäß der Erfindung besteht das Filter-Ausgangsmaterial zumindest teilweise, vorzugsweise vollständig, aus bei der Produktion anfallenden Filterstababfällen oder verbrauchten Filterstababfällen.

Wenn in diesem Zusammenhang von "Anteilen" des Filter-Ausgangsmaterials gesprochen wird, ist von dem Gewichtsanteil auszugehen, der sich direkt aus dem Filter-Ausgangsmaterial bzw. dem Zigarettenfiltermaterial ergibt.

Das Filter-Ausgangsmaterial bzw. das Zigarettenfiltermaterial liegt in unterschiedlichen Zusammensetzungen vor. Man unterscheidet hier primär zwischen bei der Produktion anfallenden Filterstababfällen bzw. FilterstabAusschüssen und verbrauchten Filterstababfällen.

Filterstababfälle bzw. Filterstab-Ausschüsse, bestehen aus Celluloseacetat und Papier, wobei das Celluloseacetat mit einem Anteil von mindestens 90 %, vorzugsweise mindestens 94 %, besonders bevorzugt mit 97 % vorliegt. Den Restanteil bildet das Papier, wobei dieser folglich höchstens 10 % beträgt.

Bei diesem Ausgangsmaterial gelten wieder die oben genannten Vorteile, die sich bei innerhalb einer Produktion anfallendem Ausschuss bzw. Abfall ergeben, da dieser produktionsnah anfällt und keine Verschmutzungen aufweist. Insbesondere ist hier die Zusammensetzung genau bekannt und steuerbar. Somit bietet sich ein solches Produkt besonders zur Weiterverarbeitung an.

Verbrauchte Filterstababfälle hingegen sind solche, die bereits in Zigaretten Verwendung gefunden haben und vom Konsumenten geraucht worden sind. Es handelt sich hiermit somit um den Rest der Zigarette, also den Zigarettenstummel bzw. die Kippe (= berauchter Zigarettenfilter). Bei derartigen verbrauchten Filterstababfällen ist mit einem Papieranteil von bis zu etwa 30 % zu rechnen. Berauchter Zigarettenfilter werden vom Konsumenten häufig einfach auf die Straße geworfen, wodurch ein unschönes und schmutziges Stadtbild entsteht. Daher ist es an dieser Stelle wünschenswert, das genannte Verfahren zusätzlich zu den in der Produktion anfallenden Filterstabausschüssen auch auf verbrauchte Filterstababfälle zu erweitern, um so berauchte Zigarettenfilter zu recyclen.

Gemäß der Erfindung werden bei der Kühlung des Filter-Ausgangsmaterials bzw. des Zigarettenfiltermaterials die Pellets und/oder die Material-Zwischenstufen unter einer kritischen Temperatur gehalten.

Die kritische Temperatur entspricht einer Verglasungstemperatur des Celluloseacetats.

Auch hier ergeben sich die bereits im Zusammenhang mit dem Verfahren zum stofflichen Wiederverwenden von Ausgangsmaterial genannten Aspekte, sodass hier die Temperatur der Materialien unterhalb der Verglasungstemperatur des Celluloseacetats liegen muss.

Gemäß der Erfindung erfolgt das Pelletieren mittels eines Kollers und einer Matrize. Die Matrize ist aus einem thermisch leitfähigen Material ausgebildet und die Kühlung erfolgt über die Matrize.

Dies hat wiederum den Vorteil, dass die Kühlung in situ, d.h. an der Stelle, an der sie benötigt wird, erfolgen kann.

Die Kühlung erfolgt mittels einer Fluidkühlung, vorzugsweise einer Wasserkühlung, und/oder mittels einer Festkörperkühlung.

Die vorgenannten Kühlungen sind bei Matrizen besonders einfach anzuwenden und robust umzusetzen. Dies ist insbesondere deswegen wichtig, da die Bauteile beim Pelletieren hohen Drücken ausgesetzt sind.

Gemäß einer vorteilhaften Realisierung des erfindungsgemäßen Verfahrens erfolgt das Pelletieren mit Hilfe einer gekühlten Ringmatrize, in welcher radial ausgerichtete Presskanäle ausgebildet sind, die sich von einer Innenfläche der Ringmatrize zu einer Außenfläche der Ringmatrize erstrecken, wobei die Ringmatrize eine ihren Mittelpunkt durchsetzende, horizontale Rotationsachse aufweist und in eine Drehrichtung von einer Antriebseinheit antreibbar ausgebildet ist. Die Ringmatrize begrenzt einen Verdichtungsraum. Ferner ist in vorteilhafter Weise ein im Verdichtungsraum angeordnetes Arbeitskollerrad vorgesehen zum Verdichten und Pressen des zu pelletierenden Materials in die Presskanäle.

Gemäß einer vorteilhaften Weiterbildung weist das Filter-Ausgangsmaterial bzw. das Zigarettenfiltermaterial eine Dichte von etwa 30 kg/m³ bis etwa 80 kg/m³ und vorzugsweise eine Dichte von etwa 45 kg/m³ bis etwa 65 kg/m³ auf, wobei die Pellets eine Schüttdichte von etwa 350 kg/m³ bis etwa 650 kg/m³ und vorzugsweise eine Schüttdichte von etwa 450 kg/m³ bis etwa 550 kg/m³ aufweisen.

Da die Pellets als Schüttgut vorliegen und auch als solches gelagert werden, ist die für Lagerung und Transport ausschlaggebende Kenngröße der Pellets die Schüttdichte und nicht die Reindichte.

Gemäß einer vorteilhaften Weiterbildung der Erfindung weist das Verfahren ferner folgende Schritte auf: Zuführen der Pellets in einen Extruder; Zuführen von einem Weichmacher zu den Pellets; Vermengen der Pellets mit dem Weichmacher; und Extrudieren des Extrudats.

Hier werden somit die aus dem vorherigen Verfahren gewonnenen Pellets in einer darauffolgenden Fertigungsstufe weiterverarbeitet. Dabei weist der Extruder vorzugsweise eine Lochplatte auf, zu der das zu verarbeitende Material kontinuierlich gefördert wird.

Der Weichmacher dient dazu, die Pellets so zu lösen, dass sie extrudiert werden können. Dabei erfolgt das Vermengen der Pellets mit dem Weichmacher vorzugsweise innerhalb des Extruders, wobei ein Thermoplast gebildet wird.

Gemäß einer vorteilhaften Weiterbildung der Erfindung ist der Extruder als Schneckenextruder, vorzugsweise als Doppel-Schneckenextruder, ausgebildet.

Somit weist der Extruder eine robuste und einfache Bauweise auf, die sich für den Zweck der oben genannten Extrusion gut eignet.

Gemäß einer vorteilhaften Weiterbildung ist der Weichmacher Triacetin und wird vorzugsweise mit einem Anteil von 10 bis 35 Gew.%, vorzugsweise 15 bis 25 Gew.%, besonders bevorzugt etwa 25 Gew.% zu den Pellets hinzugefügt.

Das heißt, dass in dem Extrudat entsprechend ein Anteil von 10 bis 35 Gew.%, vorzugsweise 15 bis 25 Gew.%, besonders bevorzugt etwa 25 Gew.% Weichmacher vorhanden sind.

Triacetin ist auch als Glycerintriacetat bekannt, also ein Ester aus dem Triol Glycerin und Essigsäure. Triacetin ist ein typischer Weichmacher für Lacke und Kunststoffe. Außerdem ist dieser ein Lösungsmittel für Celluloseacetat.

Für die Verwendung von Triacetin spricht außerdem auch, dass dieses als Verklebungsmittel für die Herstellung von Zigarettenfiltern auf Celluloseacetat-Basis Verwendung wird. Das heißt, dass dieses in kleinen Mengen bereits in dem Filter-Ausgangsmaterial vorhanden sein kann.

Gemäß einer vorteilhaften Weiterbildung der Erfindung weist das Verfahren ferner folgenden Schritt auf: Granulieren und/oder Schneiden des Extrudats in einem Wasserbad zur Erzeugung eines Granulats.

Das Granulat hat an sich den Zweck, dass der Stoff als Thermoplast besser verarbeitet werden kann, da er in einem Haufwerk mit Partikeln enger Partikelgröße in einer sinnvoll zu verarbeitenden Größe vorliegt. Insbesondere kann das Granulat als Thermoplast in einem Spritzgussverfahren weiterverarbeitet werden.

Weiterhin können Pellets mittels eines der vorherigen Verfahren hergestellt werden.

Dabei wird an dieser Stelle der Plural "Pellets" verwendet, da diese als Schüttgut vorliegen. Selbstverständlich fällt bereits ein einzelnes Pellet unter den Schutzumfang der Ansprüche. Bei den Pellets sind insbesondere die Pellets aus Filter-Ausgangsmaterial, das heißt solche, die zusätzlich zu dem Celluloseacetat auch Papier aufweisen, von Interesse. Das liegt insbesondere daran, dass diese andere (bessere) Eigenschaften aufweisen als reine Celluloseacetat-Pellets.

Insbesondere eignen sich diese ferner als Ausgangsmaterial für ein Extrudat.

So besteht nämlich die Möglichkeit, ein Extrudat anzugeben, das mittels eines der vorherigen Verfahren hergestellt werden kann.

Durch den zusätzlichen Papieranteil können die Pellets zu höherwertigem thermoplastischen Kunststoff extrudiert werden. In diesem Extrudat sind die Celluloseacetat-Fasern homogen gelöst und nur mit den Faseranteilen aus Papier, das heißt den Faseranteilen aus der Papierhülle, verknetet. Dieses Extrudat lässt sich wie andere Thermoplaste weiterverarbeiten.

Eine weitere erfindungsgemäße Lösung besteht darin, ein Granulat anzugeben, das mittels eines der vorherigen Verfahren hergestellt worden ist.

Wie bereits angedeutet, weist dieses aus Celluloseacetat, Triacetin und Papier bestehende Granulat Materialeigenschaften auf, die besser sind als die des reinen Celluloseacetats.

Beispielweise weist ein aus dem erfindungsgemäßem Granulat hergestellter Prüfkörper mit einem Triacetin-Anteil von 25 Gew.% folgende Eigenschaften auf: Eine Zugfestigkeit von 52 MPa mit einer Standardabweichung von 0,5 %, eine Bruchfestigkeit von 50,6 MPa mit einer Standardabweichung von 0,5 %, eine Streckdehnung von 3,9 % mit einer Standardabweichung von 0,03 %, eine Bruchdehnung von 5,9 % mit einer Standardabweichung von 0,7, einen Elastizitätsmodul von 2,5 GPa mit einer Standardabweichung von 0,01 und eine Kerbschlagzähigkeit von 6,5 kJ/m² mit einer Standardabweichung von 0,7.

Dabei sind sämtliche oben genannte Werte mit der Spezifikation DIN EN ISO 527-1 gemessen.

Insgesamt ergeben sich somit für das Extrudat und das Granulat sogar bessere Werte als bei reinen Celluloseacetat-Produkten.

Gemäß der Erfindung weist das Granulat eine Dichte von etwa 800 bis etwa 1100 kg/m³, vorzugsweise etwa 900 bis etwa 1000 kg/m³, besonders bevorzugt etwa 950 kg/m³ auf.

Die Schüttdichte des Granulats liegt bei etwa 500 bis 600 kg/m³.

Außerdem besteht eine erfindungsgemäße Lösung darin, ein System zum stofflichen Wiederverwenden von Ausgangsmaterial, das aus Celluloseacetat besteht oder zumindest Celluloseacetat aufweist, anzugeben, wobei das System dazu ausgebildet ist, folgenden Schritt durchzuführen: Pelletieren von Ausgangsmaterial in einer Pelletierpresse, um das Ausgangsmaterial in Pellets umzuwandeln, wobei die umgewandelten Pellets eine höhere Dichte als das zugeführte Ausgangsmaterial aufweisen, und wobei zumindest zeitweise während des Pelletierens eine Kühlung des Ausgangsmaterials, der Pellets und/oder von Material-Zwischenstufen erfolgt.

Alternativ kann auch ein Weichmacher hinzugefügt werden, um so ein thermoplastisches Granulat zu fertigen.

Außerdem wird auf ein (nicht beanspruchtes) System zum stofflichen Wiederverwenden von Filter-Ausgangsmaterial verwiesen, das aus Celluloseacetat und Papier besteht oder Celluloseacetat und Papier aufweist, wobei das System dazu ausgebildet ist, folgende Schritte durchzuführen: Zerkleinern des Filter-Ausgangsmaterials; Zuführen von Filter-Ausgangsmaterial zu einer Pelletierpresse; und Pelletieren des Filter-Ausgangsmaterials in der Pelletierpresse, um das Filter-Ausgangsmaterial in Pellets umzuwandeln, wobei die umgewandelten Pellets eine höhere Dichte als das zugeführte Filter-Ausgangsmaterial aufweisen, und wobei zumindest zeitweise während des Pelletierens eine Kühlung des Filter-Ausgangsmaterials, der Pellets und/oder von Material-Zwischenstufen erfolgt.

Gemäß einer vorteilhaften Weiterbildung werden bei der Kühlung das Filter-Ausgangsmaterial, die Pellets und/oder die Material-Zwischenstufen unter einer kritischen Temperatur gehalten, wobei die kritische Temperatur einer Verglasungstemperatur des Celluloseacetats entspricht.

Mit den oben genannten Systemen ergeben sich die gleichen Vorteile wie bei den vorgenannten Verfahren und Produkten. Auch sind die dort genannten Einzelheiten und Merkmale selbstverständlich auf die Systeme zu übertragen.

Dies gilt auch für die genannten Produkte Pellets, Extrudat und Granulat. Insgesamt sind somit sämtliche bei den Verfahren genannten Einzelheiten und Merkmale auch auf die beschriebenen Produkte bzw. Systeme auszuweiten.

## Patentansprüche

1. Verfahren zum stofflichen Wiederverwenden von Filtertow-Ausgangsmaterial, das aus Celluloseacetat besteht oder zumindest Celluloseacetat aufweist, wobei das Verfahren folgende Schritte aufweist:
- Bereitstellen von celluloseacetathaltigem Material, welches zumindest teilweise, vorzugsweise vollständig, aus bei der Produktion anfallendem Spinnereiausschuss oder Filtertow-Ballen besteht;
- Zuführen des wiederzuverwendenden celluloseacetathaltigen Materials zu einer Pelletierpresse; und
- Pelletieren des celluloseacetathaltigen Materials in der Pelletierpresse, um das celluloseacetathaltige Material in Pellets umzuwandeln,
wobei die umgewandelten Pellets eine höhere Dichte als das zugeführte celluloseacetathaltige Material aufweisen, wobei zumindest zeitweise während des Pelletierens eine Kühlung des celluloseacetathaltigen Materials, der Pellets und/oder von Material-Zwischenstufen erfolgt, wobei bei der Kühlung das celluloseacetathaltige Material, die Pellets und/oder die Material-Zwischenstufen unter einer kritischen Temperatur gehalten werden, wobei die kritische Temperatur einer Verglasungstemperatur des Celluloseacetats entspricht, wobei das Pelletieren mittels eines Kollers und einer Matrize erfolgt, wobei die Matrize aus einem thermisch leitfähigen Material ausgebildet ist und die Kühlung über die Matrize erfolgt, und wobei die Kühlung mittels einer Fluidkühlung, vorzugsweise einer Wasserkühlung, und/oder mittels einer Festkörperkühlung erfolgt.

2. Verfahren gemäß Anspruch 1, wobei dem Zuführen von celluloseacetathaltigem Material folgender Schritt vorgeschaltet ist:
- Zerkleinern des celluloseacetathaltigen Materials.

3. Verfahren gemäß Anspruch 1 oder 2,
wobei das celluloseacetathaltige Material eine Dichte von etwa 30 kg/m³ bis etwa 80 kg/m³ und vorzugsweise eine Dichte von etwa 45 kg/m³ bis 65 kg/m³ aufweist, und wobei die Pellets eine Schüttdichte von etwa 350 kg/m³ bis etwa 650 kg/m³ und vorzugsweise eine Schüttdichte von etwa 450 kg/m³ bis etwa 550 kg/m³ aufweisen.

4. Verfahren zum stofflichen Wiederverwenden von Filter-Ausgangsmaterial, wobei das Verfahren folgende Schritte aufweist:
- Bereitstellen von Filter-Ausgangsmaterial, das aus Celluloseacetat und Papier besteht oder Celluloseacetat und Papier aufweist, wobei das Filter-Ausgangsmaterial zumindest teilweise, vorzugsweise vollständig, aus bei der Produktion anfallenden Filterstababfällen oder verbrauchten Filterstababfällen besteht und/oder berauchte Zigarettenfilter enthält;
- Zerkleinern des Filter-Ausgangsmaterials;
- Zuführen des Filter-Ausgangsmaterials zu einer Pelletierpresse; und
- Pelletieren des zugeführten Filter-Ausgangsmaterials in der Pelletierpresse, um das Filter-Ausgangsmaterial in Pellets umzuwandeln,
wobei die umgewandelten Pellets eine höhere Dichte als das zugeführte Filter-Ausgangsmaterial aufweisen, und wobei zumindest zeitweise während des Pelletierens eine Kühlung des Filter-Ausgangsmaterials, der Pellets und/oder von Material-Zwischenstufen erfolgt, wobei bei der Kühlung das Filter-Ausgangsmaterial, die Pellets und/oder die Material-Zwischenstufen unter einer kritischen Temperatur gehalten werden, wobei die kritische Temperatur einer Verglasungstemperatur des Celluloseacetats entspricht, wobei das Pelletieren mittels eines Kollers und einer Matrize erfolgt, wobei die Matrize aus einem thermisch leitfähigen Material ausgebildet ist und die Kühlung über die Matrize erfolgt, und wobei die Kühlung mittels einer Fluidkühlung, vorzugsweise einer Wasserkühlung, und/oder mittels einer Festkörperkühlung erfolgt.

5. Verfahren gemäß Anspruch 4,
wobei der Anteil an Celluloseacetat in dem Filter-Ausgangsmaterial mindestens 90 % beträgt, und wobei der Anteil an Papier höchstens 10 % beträgt.

6. Verfahren gemäß Anspruch 4 oder 5,
wobei das Filter-Ausgangsmaterial Verunreinigungen aufweist, deren Anteil abzüglich eines ggf. vorhandenen Wasseranteils mit dem des Papieres zusammengenommen höchstens 10% beträgt.

7. Verfahren gemäß einem der Ansprüche 4 bis 6,
wobei das Filter-Ausgangsmaterial eine Dichte von etwa 30 kg/m³ bis etwa 80 kg/m³ und vorzugsweise eine Dichte von etwa 45 kg/m³ bis etwa 65 kg/m³ aufweist, und wobei die Pellets eine Schüttdichte von etwa 350 kg/m³ bis etwa 650 kg/m³ und vorzugsweise eine Schüttdichte von etwa 450 kg/m³ bis etwa 550 kg/m³ aufweisen.

8. Verfahren gemäß einem der Ansprüche 4 bis 7,
wobei das Verfahren ferner folgende Schritte aufweist:
- Zuführen der Pellets in einen Extruder;
- Zuführen von einem Weichmacher zu den Pellets;
- Vermengen der Pellets mit dem Weichmacher; und
- Extrudieren des Extrudats.

9. Verfahren gemäß Anspruch 8,
wobei der Extruder als Schneckenextruder, vorzugsweise als Doppelschneckenextruder, ausgebildet ist.

10. Verfahren gemäß Anspruch 8 oder 9,
wobei der Weichmacher Triacetin ist und mit einem Anteil von 10 bis 35 Gew.%, vorzugsweise 15 bis 25 Gew.%, besonders bevorzugt etwa 25 Gew.% zu den Pellets hinzugefügt wird.

11. Verfahren gemäß einem der Ansprüche 8 bis 10,
wobei das Verfahren ferner folgenden Schritt aufweist:
- Granulieren und/oder Schneiden des Extrudats in einem Wasserbad zur Erzeugung eines Granulats.

12. Granulat, das mittels des Verfahrens gemäß Anspruch 11 hergestellt worden ist, wobei das Granulat eine Dichte von etwa 800 bis etwa 1100 kg/m³, vorzugsweise etwa 900 bis etwa 1000 kg/m³, besonders bevorzugt etwa 950 kg/m³, aufweist.

## Claims

1. A method for recycling filter tow starting material consisting of or at least comprising cellulose acetate, wherein the method comprises the following steps:
- providing cellulose acetate-containing material which at least partially, preferably entirely, consists of spinning mill waste accumulating during production or of filter tow bales;
- supplying the cellulose acetate-containing material to be recycled to a pelletizing press; and
- pelletizing the cellulose acetate-containing material in the pelletizing press in order to convert the cellulose acetate-containing material into pellets,
wherein the converted pellets have a higher density than the supplied cellulose acetate-containing material, wherein there is at least intermittent cooling of the cellulose acetate-containing material, the pellets and/or intermediate material stages during the pelletizing, wherein the cellulose acetate-containing material, the pellets and/or intermediate material stages are kept below a critical temperature during the cooling, wherein the critical temperature corresponds to a cellulose acetate glass transition temperature, wherein the pelletizing is effected by a roller and a die, wherein the die is made from a thermally conductive material and the cooling is effected via the die, and wherein the cooling ensues by means of fluid cooling, preferably water cooling, and/or by means of solid-state cooling.

2. The method according to claim 1,
wherein the following step precedes the supplying of cellulose acetate-containing material:
- grinding the cellulose acetate-containing material.

3. The method according to claim 1 or 2,
wherein the cellulose acetate-containing material has a density of approximately 30 kg/m³ to approximately 80 kg/m³, and preferably a density of approximately 45 kg/m³ to 65 kg/m³, and wherein the pellets have a bulk density of approximately 350 kg/m³ to approximately 650 kg/m³, and preferably a bulk density of approximately 450 kg/m³ to approximately 550 kg/m³.

4. A method for recycling filter starting material,
wherein the method comprises the following steps:
- providing filter starting material consisting of or comprising cellulose acetate and paper, wherein the filter starting material at least partially, preferably entirely, consists of filter rod waste accumulating during production or of used filter rod waste und/ and/or smoked cigarette filters;
- grinding the filter starting material;
- supplying the filter starting material to a pelletizing press; and
- pelletizing the supplied filter starting material in the pelletizing press in order to convert the filter starting material into pellets,
wherein the converted pellets have a higher density than the supplied filter starting material, and wherein there is at least intermittent cooling of the filter starting material, the pellets and/or intermediate material stages during the pelletizing, wherein the filter starting material, the pellets and/or the intermediate material stages are kept below a critical temperature during the cooling, wherein the critical temperature corresponds to a cellulose acetate glass transition temperature, wherein the pelletizing is effected by a roller and a die, wherein the die is made from a thermally conductive material and the cooling is effected via the die, and wherein the cooling ensues by means of fluid cooling, preferably water cooling, and/or by means of solid-state cooling.

5. The method according to claim 4,
wherein the percentage of cellulose acetate in the filter starting material is at least 90%, and wherein the percentage of paper is no more than 10%.

6. The method according to claim 4 or 5,
wherein the filter starting material exhibits impurities, the proportion of which, minus any water content present, combined with that of the paper amounts to no more than 10%.

7. The method according to one of claims 4 to 6,
wherein the filter starting material has a density of approximately 30 kg/m³ to approximately 80 kg/m³, and preferably a density of approximately 45 kg/m³ to 65 kg/m³, and wherein the pellets have a bulk density of approximately 350 kg/m³ to approximately 650 kg/m³, and preferably a bulk density of approximately 450 kg/m³ to approximately 550 kg/m³.

8. The method according to one of claims 4 to 7,
wherein the method further comprises the following steps:
- feeding the pellets into an extruder;
- supplying a plasticizer to the pellets;
- mixing the pellets and the plasticizer; and
- extruding the extrudate.

9. The method according to claim 8,
wherein the extruder is designed as a screw extruder, preferably as a twin screw extruder.

10. The method according to claim 8 or 9,
wherein the plasticizer is triacetin and is added to the pellets at a percentage of 10 to 35% by weight, preferably 15 to 25% by weight, particularly preferentially at approximately 25% by weight.

11. The method according to one of claims 8 to 10,
wherein the method further comprises the following step:
- granulating and/or cutting the extrudate in a water bath to produce a granulate.

12. A granulate having been produced by the method according to claim 11, wherein the granulate has a density of approximately 800 to approximately 1100 kg/m³, preferably approximately 900 to approximately 1000 kg/m³, particularly preferentially approximately 950 kg/m³.

## Revendications

1. Procédé de réutilisation des matières d'un matériau de départ de type cordon filtrant, constitué d'acétate de cellulose ou comprenant au moins de l'acétate de cellulose, le procédé comprenant les étapes suivantes consistant à :
- fournir un matériau contenant de l'acétate de cellulose qui est constitué au moins partiellement, de préférence complètement de déchets de filature ou de balles de cordon filtrant provenant de la production ;
- amener le matériau, contenant de l'acétate de cellulose, à réutiliser vers une presse à pellets ; et
- pelletiser le matériau contenant de l'acétate de cellulose dans la presse à pellets, afin de transformer en pellets le matériau contenant de l'acétate de cellulose,
dans lequel les pellets transformés présentent une densité plus élevée que le matériau contenant de l'acétate de cellulose, amené, et un refroidissement du matériau contenant de l'acétate de cellulose, des pellets et/ou des stades intermédiaires du matériau est effectué au moins temporairement pendant la pelletisation, et
lors du refroidissement, le matériau contenant de l'acétate de cellulose, les pellets et/ou les stades intermédiaires du matériau sont maintenus en dessous d'une température critique, la température critique correspond à une température de vitrification de l'acétate de cellulose, la pelletisation est réalisée au moyen d'un rouleau-presseur et d'une matrice, la matrice est réalisée en un matériau thermiquement conducteur et le refroidissement est effectué par l'intermédiaire de la matrice, et le refroidissement est effectué au moyen d'un refroidissement par fluide, de préférence un refroidissement par eau, et/ou au moyen d'un refroidissement par corps solides.

2. Procédé selon la revendication 1,
dans lequel l'étape suivante précède l'amenée du matériau contenant de l'acétate de cellulose :
- broyer le matériau contenant de l'acétate de cellulose.

3. Procédé selon la revendication 1 ou 2,
dans lequel le matériau contenant de l'acétate de cellulose présente une densité d'environ 30 kg/m³ à environ 80 kg/m³ et de préférence une densité d'environ 45 kg/m³ à 65 kg/m³, et les pellets présentent une densité apparente d'environ 350 kg/m³ à environ 650 kg/m³ et de préférence une densité apparente d'environ 450 kg/m³ à environ 550 kg/m³.

4. Procédé de réutilisation des matières d'un matériau de départ de filtre, le procédé comprenant les étapes suivantes consistant à :
- fournir un matériau de départ de filtre constitué d'acétate de cellulose et de papier ou comprenant de l'acétate de cellulose et du papier, le matériau de départ de filtre étant constitué du moins partiellement, de préférence complètement de déchets de tiges de filtre provenant de la production ou de déchets de tiges de filtre usagés et/ou de filtres de cigarettes fumées ;
- broyer le matériau de départ de filtre ;
- amener le matériau de départ de filtre vers une presse à pellets ; et
- pelletiser le matériau de départ de filtre amené dans la presse à pellets, afin de transformer en pellets le matériau de départ de filtre,
dans lequel les pellets transformés présentent une densité plus élevée que le matériau de départ de filtre amené, et un refroidissement du matériau de départ de filtre, des pellets et/ou des stades intermédiaires du matériau est effectué au moins temporairement pendant la pelletisation, et, lors du refroidissement, le matériau de départ de filtre, les pellets et/ou les stades intermédiaires du matériau sont maintenus en dessous d'une température critique, la température critique correspond à une température de vitrification de l'acétate de cellulose, la pelletisation est réalisée au moyen d'un rouleau-presseur et d'une matrice, la matrice est réalisée en un matériau thermiquement conducteur et le refroidissement est effectué par l'intermédiaire de la matrice, et le refroidissement est effectué au moyen d'un refroidissement par fluide, de préférence un refroidissement par eau, et/ou au moyen d'un refroidissement par corps solides.

5. Procédé selon la revendication 4,
dans lequel la proportion d'acétate de cellulose dans le matériau de départ de filtre est de 90 % au minimum, et la proportion de papier est de 10 % au maximum.

6. Procédé selon la revendication 4 ou 5,
dans lequel le matériau de départ de filtre comprend des impuretés dont la proportion, déduction faite d'une proportion d'eau éventuellement présente, et prise ensemble avec celle du papier, est égale à 10 % au maximum.

7. Procédé selon l'une des revendications 4 à 6,
dans lequel le matériau de départ de filtre présente une densité d'environ 30 kg/m³ à environ 80 kg/m³ et de préférence une densité d'environ 45 kg/m³ à environ 65 kg/m³, et les pellets présentent une densité apparente d'environ 350 kg/m³ à environ 650 kg/m³ et de préférence une densité apparente d'environ 450 kg/m³ à environ 550 kg/m³.

8. Procédé selon l'une des revendications 4 à 7,
ledit procédé comprenant en outre les étapes suivantes consistant à :
- amener les pellets jusque dans une extrudeuse ;
- ajouter un plastifiant aux pellets ;
- mélanger les pellets avec le plastifiant ; et
- extruder le produit d'extrusion.

9. Procédé selon la revendication 8,
dans lequel l'extrudeuse est réalisée sous forme d'extrudeuse à vis, de préférence sous forme d'extrudeuse à double vis.

10. Procédé selon la revendication 8 ou 9,
dans lequel le plastifiant est la triacétine et est ajouté aux pellets à raison de 10 à 35 % en poids, de préférence à raison de 15 à 25 % en poids, de manière particulièrement préférée à raison d'environ 25 % en poids.

11. Procédé selon l'une des revendications 8 à 10,
ledit procédé comprenant en outre l'étape suivante consistant à :
- granuler et/ou couper le produit d'extrusion dans un bain d'eau pour obtenir un granulé.

12. Granulé obtenu par le procédé selon la revendication 11,
le granulé présentant une densité d'environ 800 à environ 1100 kg/m³, de préférence d'environ 900 à environ 1000 kg/m³, de manière particulièrement préférée d'environ 950 kg/m³.
